# EUROPÄISCHE PATENTSCHRIFT

(11) **EP 1 417 914 B1**
(45) Veröffentlichungstag und Bekanntmachung des Hinweises auf die Patenterteilung: **07.12.2005**
(21) Anmeldenummer: 03024728.2
(22) Anmeldetag: 29.10.2003
(51) Int. Cl.: A47J 31/06, A47J 31/40

(54) **Gerät zur Zubereitung von Heissgetränken, insbesondere Kaffee oder Espresso**
Apparatus for preparing hot beverages, in particular for coffee or espresso
Appareil pour préparer des boissons chaudes, en particulier du café ou du café espresso

(30) Priorität: 08.11.2002 DE 20217408 U
(43) Veröffentlichungstag der Anmeldung: 12.05.2004
(73) Patentinhaber: Eugster/Frismag AG, 8590 Romanshorn (CH)
(72) Erfinder: Fischer, Daniel, 8590 Romanshorn (CH)
(74) Vertreter: Schubert, Siegmar

(56) Entgegenhaltungen:
- EP-A- 0 564 399
- EP-A- 0 710 462
- EP-A- 0 931 491
- WO-A-02/09563
- US-A- 6 035 762

## Beschreibung

Die Erfindung betrifft ein Gerät zur Zubereitung von Heißgetränken, insbesondere Kaffee und Espresso, nach dem Oberbegriff des Anspruchs 1.

Eine bekannte Kaffeemaschine mit Merkmalen des Oberbegriffs des Anspruchs 1 weist einen eine Brühkammer begrenzenden Brühzylinder, einen Verschlußkolben zum endseitigen Verschließen des Brühzylinders sowie einen beweglich im Brühzylinder angeordneten Kolben zum Verdichten von Kaffeepulver und/oder zum Ausstoßen eines ausgelaugten Kaffeekuchens auf (EP-A-O 931 491). Der Verschlußkolben und der Brühkolben sind Kammerteile, die zusammen mit dem Brühzylinder die Brühkammer bilden. Sowohl der Verschlußkolben als auch der Brühkolben sind mit je einem Dichtring versehen, der in Verbindung mit dem Brühzylinder einen Innenraum der Brühkammer abdichtet. Die Kaffeemaschine mit dieser Brühkammer ist ausschließlich zur direkten Aufnahme von gemahlenem Kaffee in die Brühkammer ausgebildet.

In Geräten zur Zubereitung von Heißgetränken, insbesondere Kaffee oder Espresso, sollen aber inzwischen Portionsbehälter zum Einsatz kommen. Dies sind insbesondere Filterbeutel, sogenannte Pouches, die meist flach linsenförmig oder topfförmig ausgebildet sind und entweder aus einem filterfähigen Papier oder Kunststoffgewebe, in dem das Kaffeemehl eingesiegelt ist, bestehen. Sonst können die Portionsbehälter auch aus tiefgezogener Aluminium- oder Kunststoffolie bestehen, die zu einem Topf gezogen und mit einem Deckel versehen sind.

Zum Zwecke der Kaffeezubereitung werden diese Portionsbehälter, insbesondere Filterbeutel, in dem Zubereitungsgerät in eine Brühkammer eingelegt, die zweitteilig aus einem Oberteil und einem Unterteil besteht, und mit Ausnahme einer Brühwassereintrittsleitung und einer Brühsudauslaßleitung nach dem Einlegen des Portionsbehälters druck- und wasserdicht verschlossen wird. Für den Brühvorgang tritt Brühwasser unter Druck in die Brühkammer ein und fließt im Falle der Filterbeutel aus filterfähigem Behältermaterial direkt durch den in der Brühkammer liegenden Filterbeutel, laugt dabei das Kaffeemehl aus, und fließt als fertiges Getränk über die Sudauslaßleitung in ein Auffanggefäß. Im Fall der wasserdichten verschlossenen Portionsbehälter sind in der Brühkammer zusätzlich Mittel vorgesehen, die beim Schließen der Brühkammer oder während des Brühvorgangs, entweder mechanisch oder durch den Druck des Brühwassers, sowohl den Behälterdekkel als auch den Behälterboden partiell durchstoßen oder aufbrechen.

Eine solche bekannte Brühkammer besteht aus einem oberen, an einer Kaffeemaschine festen Teil, in das heißes Brühwasser einströmen kann, sowie einen unteren Teil, das an dem oberen Teil zur Anlage gebracht werden kann, wobei eine Vertiefung des unteren Teils einen Filterbeutel aufnehmen kann (EP-A-0 710 462). Die Brühkammer ist um eine vertikale Achse rotationssymmetrisch. In das untere Teil kann ein gegenüber seinem Rand vertiefter Filtereinsatz eingelegt sein, der den Filterbeutel trägt. Eine Abdichtung der Brühkammer erfolgt durch eine Ringdichtung zwischen deren oberen Teil und dem Rand des Filtereinsatzes, der auf dem unteren Teil aufliegt.

- Die Abdichtung ist problematisch, da ihr der Druck des Brühwassers entgegenwirkt. Der ausgelaugte Filterbeutel muß dadurch umständlich entfernt werden, daß er erfaßt und aus der Vertiefung des unteren Teils der Brühkammer herausgehoben wird.

Die Erfindung befaßt sich insbesondere mit dem Problem, die Brühkammer und die Portionskapsel in ihr abzudichten, daß das Brühwasser nicht unter Umgehung des Portionsbehälters direkt aus der Brühkammer austritt und möglichst vollständig so durch den Portionsbehälter, insbesondere Pouch, fließt, daß dabei dessen gesamter Inhalt gleichmäßig ausgelaugt wird. Dabei wird ausgegangen von Pouches und Portionskapseln die mit einem umlaufenden Kragen versehen sind, der bei den Pouches durch eine Verschweißfläche von Oberteil und Unterteil und bei den Portionskapseln durch eine Verschlußzone von Topf und Deckel gebildet wird. Im Falle der Portionskapseln dient dieser Kragen als Dichtfläche zwischen dem Oberteil und dem Unterteil der Brühkammer. Im Falle der Pouches hat es sich gezeigt, daß eine Abdichtung der Brühkammer mittels des Verschweißkragens unzuverlässig ist, da die Filtermaterialien nach dem Füllen mit Kaffeemehl, und bedingt durch ihre geringe Tiefziehfähigkeit zur Faltenbildung neigen, was beim Verschweißen von Oberteil und Unterteil eine ungleichmäßige Kragenstruktur ergeben kann, die beim Brühvorgang zu Undichtigkeit der Brühkammer führt.

Bei einem bekannten Gerät, das zum Einsatz tiegelförmiger Filterbeutel ausgelegt ist, die auch als Pouch angesehen werden können, umfaßt eine erste Ausführungsform der Brühkammer einen Filterbehälter als Unterteil, der einen tiegelfömigen Innenraum mit einem gegenüber einem Rand abgesenkten Boden und einer den Rand umrundenden senkrechten, zylindrischen geschlossenen Seitenwand aufweist (DE 698 01 081 T2). In dem Boden ist eine Anzahl rillenförmiger Nuten vorgesehen, die in radialer Richtung zu einer Auslaßöffnung verlaufen. Das Unterteil mit eingelegtem Filterbeutel ist durch einen flachen Deckel als Oberteil verschließbar; der Filterbehälter mit dem Deckel bilden also die Brühkammer. Der Deckel enthält außerdem an seinem Außenrand einen Dichtring, der sich unter Druck des Brühwassers radial nach außen bewegen und an der senkrechten Seitenwand des Filterbehälters anlegen soll. Das Brühwasser soll den Filterbeutel von oben nach unten durchdringen und an den Stellen, an denen die Nuten angeordnet sind, aus dem Filterbeutel herausfließen. Dagegen soll zwischen den Nuten nur wenig Sud den Filterbeutel herausfließen, damit es insgesamt den Filterbeutel nicht zu rasch durchdringt. Außerdem soll das in den Filterbehälter eingeleitete Brühwasser nicht an die Auslaßöffnung fließen, ohne sich durch das Kaffeemehl in dem Filterbeutel zu bewegen. Hierzu liegt der Boden des Filterbeutels direkt auf dem Böden des Filterbehälters auf, wo keine Nuten sind. Der Kragen des Filterbeutels kann unter dem Dichtring liegen. Da dieser in der Brühkammer angeordnet ist, ist nicht mit Sicherheit und nicht ohne sorgfältige Reinigung zu vermeiden, daß sich im Bereich der Dichtung Kaffeepartikel ablagern, die zu Undichtigkeiten der Brühkammer führen.

In einer bekannten Variante kann der Dichtring innerhalb der Seitenwand des Filterbehälters angeordnet sein und der Boden des Filterbehälters kann eine größere Anzahl zylindrischer Vorsprünge statt der radialen Rillen aufweisen. Das Dichtungsproblem wird damit aber ebenfalls nicht vollkommen gelöst. - In beiden Fällen besteht die unerwünschte Möglichkeit, daß das Brühwasser nicht an dessen Zufuhrseite vollständig in den Filterbeutel eindringt, sondern an diesem vorbeifließt. In beiden Fällen mußt der Filterbeutel bzw. Pouch exakt in den tiegelförmigen Innenraum des Filterbehälters eingelegt werden, nach Verbrauch muß er aus diesem umständlich entnommen werden.

Der vorliegenden Erfindung liegt daher die Aufgabe zugrunde, das Einlegen des Pouches und die Entnahme des verbrauchten Pouches in die Filterkammer bei verbesserter wartungsarmer Abdichtung zu erleichtern.

Diese Aufgabe wird bei dem gattungsgemäßen Gerät mit den in dem kennzeichnenden Teil des Anspruchs 1 angegebenen Merkmalen gelöst.

Durch Ausbildung der mittig geteilten Brühkammer mit einem beweglichen Kammerteil, welches eine im wesentlichen plane untere Innenfläche und eine erste Hälfte der Brühkammer umfaßt, sowie mit einem gerätefesten Kammerteil, welches eine im wesentlichen plane obere Innenfläche der Brühkammer und eine zweite Hälfte der Brühkammer beinhaltet, kann der Pouch bequem in die geöffnete geteilte Brühkammer eingelegt werden. Ein nur annähernd in seiner Soll-Lage auf die untere Innenfläche des beweglichen Kammerteils aufgelegter Pouch wird selbsttätig bei Aufschieben des beweglichen Kammerteils auf das gerätefeste Kammerteil zwischen den beiden Hälften der Brühkammer positioniert. Besonders einfach ist das Entfemen des verbrauchten Pouches durch Herausschieben von der unteren planen Innenfläche weg. Die Form der unteren planen Innenfläche und der oberen planen Innenfläche kann an die Gestalt des Pouches angepaßt sein. Die Dichtung der Brühkammer nach außen wird an den geschlossenen Wandabschnitten um die planen Innenflächen der Brühkammer bewirkt, die von der Hülse umfaßt werden.

Demgemäß wird die zweiteilige Brühkammer mit einer verschiebbaren Hülse ergänzt, die in Verbindung mit zwei Dichtringen, von denen je einer einen geschlossenen, d.h. umlaufenden zylindrischen Abschnitt je eines der beiden Kammerteile umgreift, im zusammengesetzten Zustand der Brühkammer eine gute Abdichtung der Brühkammer erreicht. Das Innere der beiden Brühkammerteile kann infolge der nach außen verlagerten Abdichtung der Brühkammer weitgehend frei insbesondere zum einfachen, aber funktionsgerechten Einlegen des Pouches und zur gewünschtenfalls selbsttätigen Entfernung des verbrauchten Pouches nach dem Brühvorgang gestaltet sein.

In der Öffnungsstellung der Brühkammer befindet sich die Hülse außerhalb einer Trennstelle des beweglichen Kammerteils von dem gerätefesten Kammerteil, so daß das bewegliche Kammerteil ungehindert bewegt, d.h. je nach Ausführungsform bevorzugt geschwenkt oder in einer linearen Bewegung geschoben werden kann.

Durch die zurückgeschobene Hülse wird das Auflegen des Pouches auf das bewegliche Kammerteil nicht behindert. Indem die Hülse über dem ortsfesten Kammerteil zurückgeschoben wird, braucht sie nicht mit dem anderen Kammerteil zusammen zum Öffnen oder Schließen der Brühkammer bewegt zu werden.

In der geschlossenen Stellung der Brühkammer wird die Hülse über die Trennstelle so weit verschoben, daß sie die Dichtringe jeweils an dem beweglichen Kammerteil und an dem gerätefesten Kammerteil dichtend überdeckt. Zum Öffnen der Brühkammer nach dem Brühvorgang kann die Hülse wieder zurückgeschoben werden. Durch die Verschiebebewegung über die Dichtringe tritt eine Selbstreinigung der Dichtungsstellen ein.

Zur selbsttätigen, also die Aufmerksamkeit der Bedienungsperson nicht beanspruchenden Durchführung der Hülsenverschiebung ist gemäß Anspruch 2 die Hülse mit dem beweglichen Brückenkammerteil gekoppelt.

Eine besonders einfache Anordnung der beiden Dichtringe ist in Anspruch 3 angegeben. Hierbei sind die beiden Dichtringe in die beiden Kammerteile eingelassen und die Innenwand der Hülse, die mit ihnen zusammenwirkt, ist einfach ohne Nuten und dergleichen glatt durchgängig ausgeformt. - Es ist aber auch möglich, die Dichtringe in einer beispielsweise zusammengesetzten Hülse innen anzubringen, und um diese mit durchgängig zylindrischen Wandabschnitten der Kammerteile zusammenwirken zu lassen. In diesem Fall muß der Dichtungsring zum Abdichten des beweglichen Kammerteils über die Trennstelle geschoben werden.

Besonders vorteilhaft ist eine Abstreifklinke an dem Verfahrbereich des beweglichen Kammerteils nach Anspruch 4 angeordnet, die den verbrauchten Pouch selbsttätig von dem beweglichen Kammerteil in einen darunter befindlichen Abfallbehälter abstreift, wenn das bewegliche Kammerteil in die geöffnete Stellung zur Aufnahme des nächsten Pouches bewegt wird. Das Abstreifen wird von der planen Innenfläche dieses Kammerteils und der ersten Hälfte der Brühkammer nicht behindert, da diese zum Durchtritt der Abstreifklinke eine Ausnehmung aufweist. Bei der entgegengesetzten Bewegungsrichtung dieses Kammerteils ist dagegen die Abstreifklinke wirkungslos, sie gibt in diesem Fall nach, so daß der zum Brühen aufgelegte Pouch ungehindert zu dem zweiten Kammerteil bewegt werden kann.

Die die Bedienung des Geräts erleichternde Abstreifklinke kann konstruktiv unkompliziert an einem Träger, der ortsfest mit dem Geräterahmen verbunden ist oder an der Hülse so schwenkbar gelagert sein, daß sie gegen einen Anschlag bzw. eine Anschlagfläche an dieser stößt und damit als Abstreifer des verbrauchten Pouches wirksam ist, wenn er im Verlauf seiner Bewegungsbahn in Richtung auf die Öffnungsstellung des beweglichen Klammerteils an die Abstreifklinke anstößt. Stößt hingegen ein für den nächsten Brühvorgang aufgelegter Pouch beim Fahren in die Verschlußstellung der Brühkammer an die Sperrklinke, so wird diese dadurch ohne weiteres zurückgeschwenkt und ist unwirksam. Zur gesicherten Brühwasserzufuhr in den Pouch, so daß das in dem Pouch enthaltene Kaffeemehl oder andere Aromaträger von dem gesamten in die Brühkammer eingeführten Brühwasser durchdrungen wird, steht nach Anspruch 7 von einer der beiden Innenflächen eines der beiden Kammerteile mindestens eine noppenförmige Erhebung mit einer Brühwassertufuhrbohrung hervor. Auf dieser noppenförmigen Erhebung liegt der in die Filterkammer eingelegte Pouch bei dem Brühvorgang dicht an, wodurch eine Punktbenetzung des Pouches eintritt, die einen definierten Brühwassereintritt in den Pouch gewährleistet. Die dichte Anlage des Pouches an der noppenförmigen Erhebung kann durch den sich in dem Pouch aufbauenden Innendruck noch verstärkt werden. Die Brühwasserzufuhr kann wahlweise in dem unteren beweglichen Kammerteil, aber auch in dem oberen gerätefesten Kammerteil erfolgen, wenn diese dazu ausgebildet sind. Die der Brühwasserzufuhrstelle gegenüberliegenden Innenfläche in der Brühkammer, die durch den anderen Kammerteil gebildet ist, ist bevorzugt nach Anspruch 10 im Abstand zu dem äußeren Rand der Innenfläche mit ringförmigen Rillen ausgebildet, die konzentrisch angeordnet sind und mindestens mit einer Sudablaufleitung in Verbindung stehen. An den ringförmigen Rillen kann der Sudablauf aus dem Inneren des Filterbehälters gleichmäßig und unter Überwindung eines definierten Strömungswiderstands erfolgen, nachdem das Brühwasser das Kaffeemehl oder den sonstigen Aromaträger weitgehend homogen durchströmt hat. In den Bereichen der Innenfläche, die nicht durch die kreisringförmigen Rillen vertieft sind, liegt dagegen der Pouch dicht an, so daß praktisch kein Sud aus dem Filtermaterial austreten kann. Die Dichtwirkung kann im Randbereich des Pouches benutzt werden.

Die gleichmäßige Durchströmung des Kaffeemehls oder sonstigen Aromaträgers in der Brühkammer während des Brühvorgangs kann durch die Ausbildung des Geräts nach Anspruch 9 wesentlich gefördert werden, indem sich der Innenraum der Brühkammer, d.h. der Brühraum, unter Einwirkung des Brühwasserdrucks auf mindestens ein entgegen einer Federkraft verschiebbares Kammerteil erweitert, und zwar so lange, bis ein stromabwärts des Brühraums angeordnetes federbelastetes Crema-Ventil öffnet, wobei eine Druckentlastung in dem Brühraum eintritt und der Brühvorgang beendet wird. Die Brühkammer ist auch bei ihrer maximalen Ausdehnung unter Brühwasserdruck innerhalb des Hülsendichtungsbereichs, der durch den axialen Abstand der Dichtringe definiert ist, abgedichtet.

Um sicher zu vermeiden, daß eine Brühwasserzufuhr erfolgt, wenn die Brühkammer noch nicht zusammengesetzt und durch die Hülsen abgedichtet ist, steht nach Anspruch 10 das bewegliche Kammerteil und/oder die Hülse mit einer Sicherheitsvorrichtung in Verbindung, die in einem solchen Störungsfall die Brühwasserzufuhr sperrt.

Um die gewünschte Kaffeemenge der Größe des Auffanggefäßes zuverlässig anzupassen, ist eine programmierbare Durchflußmengensteuerung der Brühwassermenge vorgesehen.

Die Erfindung wird im folgenden anhand eines Ausführungsbeispiels mit vier Figuren weiter erläutert. Es zeigen:
- Fig. 1: einen Geräterahmen mit den eine Brühkammer bildenden Kammerteilen in Öffnungsstellung, und einer hochgezogenen Hülse, die eine Abdichtung der Brühkammer bewirken kann, jeweils in einem vertikalen Schnitt, sowie einen zum Einsatz in die Brühkammer vorgesehenen Pouch in einer Seitenansicht,
- Fig. 2: den Geräterahmen mit der Brühkammer gemäß Fig. 1 in Verschlußstellung, d.h. zusammengesetzter Stellung mit zur Dichtung abgesenkter Hülse in einem vertikalen Schnitt sowie einen in der Brühkammer liegenden Pouch in Seitenansicht,
- Fig. 3: den Geräterahmen gemäß Fig. 1 und Fig. 2 in Auswurfstellung mit getrennten Brühkammerteilen und hochgezogener Hülse in einem vertikalen Schnitt sowie einen ausgeworfenen Pouch in einer Seitenansicht,
- Fig. 4: ein erstes Kammerteil, nämlich das in den Figuren 1 und 2 und 3 dargestellte untere, bewegliche Kammerteil in einer Draufsicht und
- Fig. 5: das andere in den Figuren 1 und 2 und 3 dargestellte obere Kammerteil, welches in dem Geräterahmen ortsfest angeordnet ist, in einer Ansicht auf dessen Innenseite.

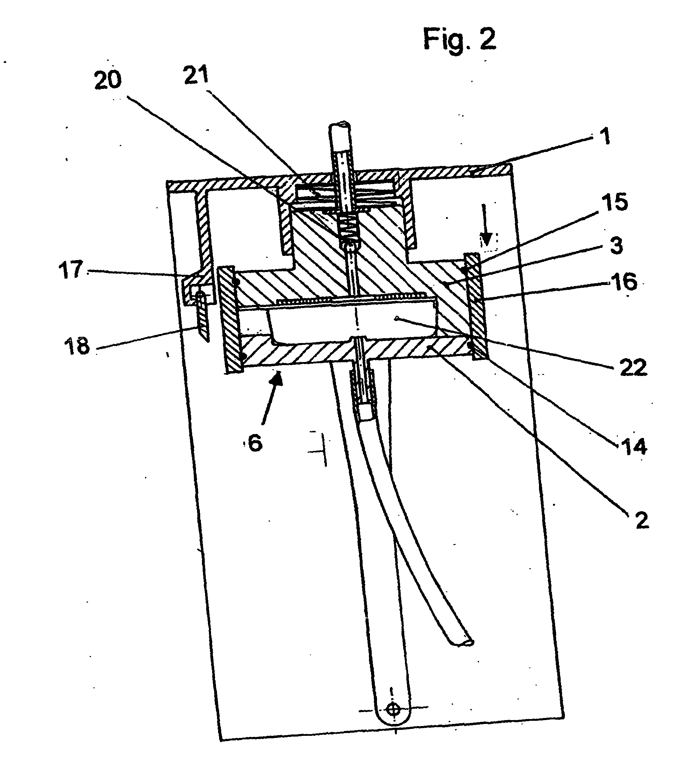

In der Zeichnung sind an einem Geräterahmen 1 als Bestandteile einer allgemein mit 6 bezeichneten Brühkammer ein unteres, bewegliches Kammerteil 2 und ein mit diesem zusammensetzbares oberes, gerätefestes Kammerteil mit 3 bezeichnet. Das bewegliche Kammerteil 2 dient zur Aufnahme eines Kaffeemehl oder einen anderen Aromastoff enthaltenden Pouches 22, der im wesentlichen aus Filtermaterial besteht. Der Pouch 22 kann auf das untere bewegliche Kammerteil 2 aufgesetzt werden, welches deswegen auch Aufnahmeteil genannt wird und zusammen mit diesem in Richtung eines Pfeils 23 zu dem oberen gerätefesten Kammerteil 3 geschwenkt werden kann, welches damit unter Einschluß des Pouches schubladenähnlich verschlossen wird, siehe auch Figur 2, womit die Brühkammer 6 in Verschlußstellung gebildet wird. Die Brühkammer 6 kann aber auch dadurch erzeugt werden, daß analog umgekehrt das untere Kammerteil 2 gerätefest angeordnet ist und das obere Kammerteil 3 beweglich. Zur Bewegung eines der beiden Kammerteile 2, 3 wird eine Schwenkbewegung mit großem Schwenkradius bevorzugt. Die Bewegung kann auch als eine horizontale lineare Verschiebung der beiden Kammerteile ineinander erfolgen.

Dargestellt ist im wesentlichen die Baueinheit, welche die Brühkammer bildet, während andere Teile des Geräts, insbesondere die Brühwasserbereitung und deren Zufuhr zu der Brühkammer 1 sowie ein Sudablauf des in der Brühkammer zubereiteten Getränks in ein aufnehmendes Gefäß nicht dargestellt sind.

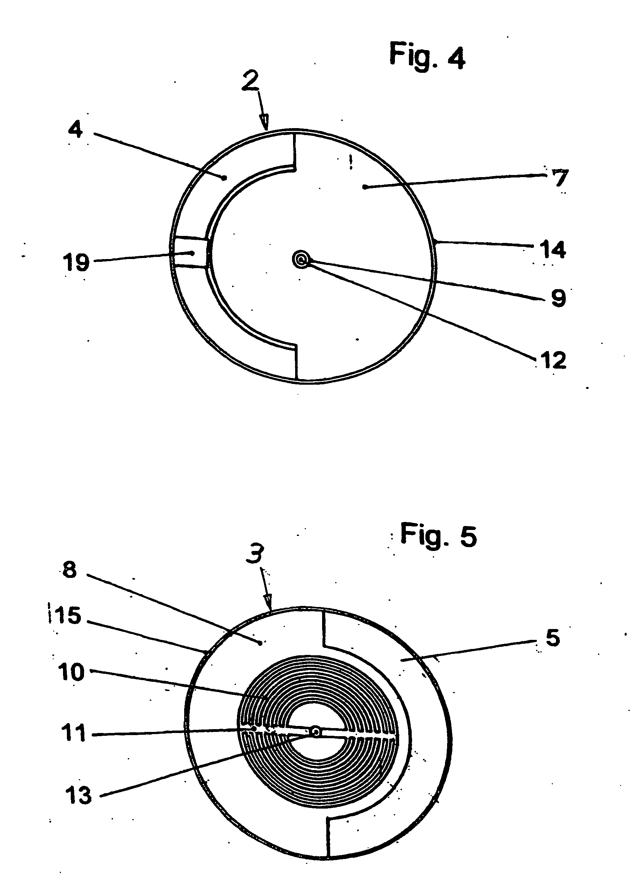

Im einzelnen ist das untere bewegliche Kammerteil 2 als erste Hälfte 4 der Brühkammer im wesentlichen in Form eines flachen Zylinderabschnitts und mit einer im wesentlichen kreisflächenförmigen Innenseite 7, siehe auch Figur 4, ausgebildet, die als erste Innenseite bezeichnet wird und die mit Ausnahme einer zentralen noppenförmigen Erhebung 9 mit einer Brühwasserzufuhrbohrung 12 plan ist.

Das zweite gerätefeste Kammerteil 3 ist als zweite Hälfte 5 der Brühkammer im wesentlichen in Form eines flachen Zylinderabschnitts mit gleichem Außendurchmesser und einer zweiten im wesentlichen planen Innenfläche 8, siehe Figur 5, ausgebildet. Auf der Innenfläche 8 sind ringförmige Rillen 10 konzentrisch angeordnet, die mit einer Sudablaufleitung 13 in Verbindung stehen. Die ringförmigen Rillen sind mit einer Sud sammelnden Vertiefung 11 in dem zweiten Kammerteil 3 verbunden, die in die Sudablaufleitung 13 mündet.

Es sei an dieser Stelle bemerkt, daß statt der obigen Konfiguration das erste untere bewegliche Kammerteil mit den ringförmigen Rillen und der Sudablaufleitung ausgebildet sein kann und das zweite obere Kammerteil mit der Brühwasserzufuhrbohrung.

Jeder der beiden Kammerteile 2, 3 weist in einem geschlossenen zylindrischen Wandabschnitt mit je einem Dichtring 14 bzw. 15 auf.

Beide Dichtringe 14, 15 sind geeignet, im Verschlußzustand der Brühkammer 6, siehe Figuren 2, umlaufende Dichtungen zusammen mit einer zylindrischen Innenfläche einer vertikal verschiebbaren zylindrischen Hülse 16 zu bilden.

Die Form und die Abmessungen der Kammerteile 2, 3 sind so auf diejenige des Pouches 22 abgestimmt, daß der Pouch 22 wenigstens annähernd richtig ausgerichtet nicht über die erste Innenfläche 7 hervorsteht. Entsprechendes gilt sinngemäß bzgl. der zweiten Innenfläche 8.

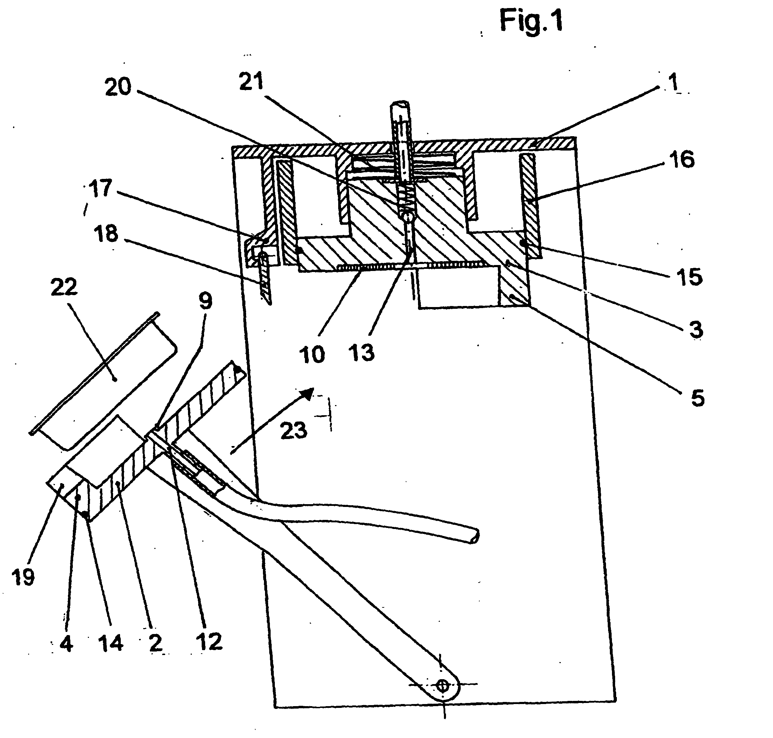

Von einem Träger 17 steht an der in den Figuren 1, 2, 3 gezeigten Stelle eine an dem Träger schwenkbar gelagerte Abstreifklinke 18 nach unten ab, die leicht entgegen den Urzeigersinn geschwenkt werden kann, jedoch an einer Schwenkung im Urzeigersinn durch Anlage an einer nicht bezeichneten Innenfläche des Trägers gehindert wird. - Das erste untere bewegliche Kammerteil 2 weist eine Ausnehmung 19 auf, in deren Bewegungsbahn die Abstreifklinke 18 liegt, so daß das erste untere bewegliche Kammerteil 2 durch die Abstreifklinke in jedem Fall ungehindert unter der Abstreifklinke vorbei bewegt werden kann.

Zur Zubereitung eines Getränks wird der Pouch 22 mit dem entsprechenden Aromastoff, insbesondere Kaffee, auf das erste untere bewegliche Kammerteil 2 gesetzt und auf diesem grob ausgerichtet, woraufhin das erste bewegliche Kammerteil 2 ungehindert in Richtung des Pfeils 23 unter das zweite gerätefeste Kammerteil geschoben werden kann, bis die beiden Kammerteile 2, 3 die zusammengesetzte Brühkammer 6 bilden.

Die damit erreichte Verschlußstellung der beiden Kammerteile 2, 3 bzw. der Brühkammer 6 ist in Figur 2 dargestellt. Dabei befindet sich die Hülse 16 im hochgeschobenen Zustand, der die Bewegung des ersten beweglichen Kammerteils 2 nicht behinderte.

Anschließend wird vor einem Brühwassereinlaß in die Brühkammer die Hülse 16 in die in Figur 2 dargestellte Stellung abgesenkt und die nicht bezeichnete zylindrische Innenfläche der Hülse 16 gleitet über die Dichtringe, zunächst 15 und dann 14, wobei Verunreinigungen mittels der Hülse 16 von den Dichtringen 14, 15 selbsttätig entfernt werden. In der in Figur 2 dargestellten Dichtstellung ist die Brühkammer 6 an beiden Dichtringen 14, 15 nach außen abgedichtet.

Bei der anschließenden Brühwasserzufuhr durch die Brühwasserzufuhrbohrung 12 wird das Brühwasser zuverlässig in den Pouch 22 gedrückt, wobei der Sud des Brühgetränks bzw. Kaffeesud entsteht, der praktisch ausschließlich im Bereich der ringförmigen Rillen 10 oben aus dem Pouch 22 entweicht und unter Druck durch die Sudablaufleitung 13 zu einem nicht dargestellten Auffanggefäß strömt.

Der Brühvorgang kann durch eine Weiterbildung der Brühkammer optimiert werden, bei der das erste Kammerteil und/oder das zweite Kammerteil entgegen der Kraft einer Feder in axialer Richtung verschiebbar sind, wobei das Volumen in der Brühkammer durch den dort herrschenden Brühdruck expandiert, so daß das Kaffeemehl oder ein anderer Aromastoff in dem Pouch sich unter Einwirkung des Brühwassers ausdehnen kann und mit diesem besonders gleichmäßig durchtränkt wird. In dem vorliegenden Fall ist das obere Kammerteil 3 entgegen der Kraft der Feder 21 axial verschiebbar statt der generell ortsfesten Anordnung dieses Kammerteils.

Da hier vor der Sudablaufleitung 13 ein Crema-Ventil 20 angeordnet ist, erfolgt die Ausdehnung der Brühkammer bis zu einem Öffnen des Crema-Ventils, wonach der Innendruck in der Brühkammer 1 absinkt und die Kammerteile 2, 3 durch Federkraft axial zusammenrücken.

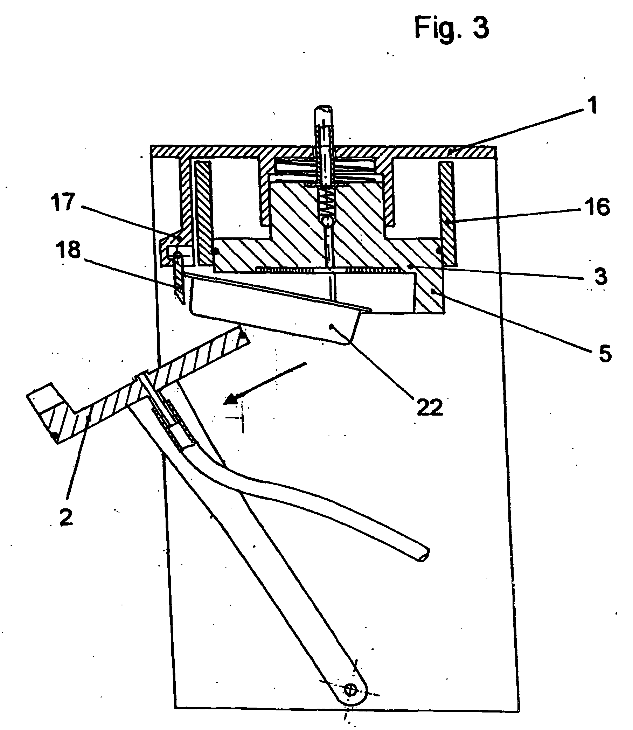

Nach Abschluß des Brühvorgangs wird das erste bewegliche Kammerteil 2 entgegen der Richtung des Pfeils 23 in die Offenstellung, die in Figur 1 gezeigt ist, zurückgefahren, wobei der Pouch 22 an der Abstreifklinke 18 anstößt und wie in Fig. 3 dargestellt nach unten fällt, wenn das erste bewegliche Kammerteil weit genug in die in Figur 1 dargestellte Stellung zurückgeschwenkt ist. Das erste untere bewegliche Kammerteil ist dann zur Aufnahme eines frischen Pouches bereit.

### Bezugszahlenliste

- 1: Geräterahmen
- 2: unteres bewegliches Kammerteil (Aufnahmeteil)
- 3: oberes gerätefestes Kammerteil
- 4: 1. Hälfte der Brühkammer
- 5: 2. Hälfte der Brühkammer
- 6: Brühkammer
- 7: 1. Innenfläche
- 8: 2. Innenfläche
- 9: noppenförmige Erhebung
- 10: ringförmige Rillen
- 11: Sud-sammelnde Vertiefung
- 12: Brühwasserzuführbohrung
- 13: Sudablaufleitung
- 14: Ringdichtung
- 15: Ringdichtung
- 16: Hülse
- 17: Träger
- 18: Abstreifklinke
- 19: Ausnehmung
- 20: Crema-Ventil
- 21: Feder
- 22: Pouch
- 23: Pfeil

## Patentansprüche

1. Gerät zur Zubereitung von Heißgetränken, insbesondere Kaffee und Espresso, mit einer außen im wesentlichen zylindrischen Brühkammer (6), die wenigstens zwei Kammerteile (2, 3) umfaßt, von denen eines (2) in eine Öffnungsstellung gegenüber dem anderen (3) entfernbar ist, wobei die Brühkammer (6) mit wenigstens einem Dichtring (14. 15) abgedichtet ist, wobei eine Hülse (16) mit einer an die zylindrische Brühkammer angepaßten Innenwand über beide Kammerteile (2, 3) schiebbar ist und wobei zwischen einer Innenwand der Hülse (16) und der Brühkammer (6) wenigstens zwei Dichtringe (14, 15) dergestalt angeordnet sind, daß in Verschlußstellung je einer der beiden Dichtringe (14, 15) je eines der beiden Kammerteile (2, 3) an der Innenwand der Hülse nach außen abdichtet,
**dadurch gekennzeichnet,**
**daß** zur Aufnahme oder Abgabe einer Portionskapsel, insbesondere eines Pouches (22) die Brühkammer (6) in ein bewegliches Kammerteil (2) und ein gerätefestes Kammerteil (3) im wesentlichen mittig dergestalt geteilt ist, daß das bewegliche Teil (2) eine im wesentlichen plane untere Innenfläche der Brühkammer (6) umfaßt sowie eine erste Hälfte (4) der Brühkammer (6) bildet und das gerätefeste Kammerteil (3) eine im wesentlichen plane obere Innenfläche (8) der Brühkammer (6) umfaßt sowie eine zweite Hälfte (5) der Brühkammer (6) bildet, und daß die Hülse (16) in der Öffnungsstellung der Kammerteile (2, 3) über dem gerätefesten Kammerteil (3) soweit zurückgeschoben ist, daß das bewegliche Kammerteil (2) freiliegt.

2. Gerät nach Anspruch 1,
**gekennzeichnet durch**
eine Kopplung zwischen der Hülse (16) und einem beweglichen (2) der beiden Kammerteile, die zwangsgeführt zusammensetzbar und voneinander entfernbar sind, mit der die Hülse nach Zusammensetzen der beiden Kammerteile über das bewegliche Kammerteil (2) abdichtend schiebbar ist.

3. Gerät nach Anspruch 1 oder 2,
**dadurch gekennzeichnet,**
**daß** jedes der beiden Kammerteile (2, 3) einen geschlossenen zylindrischen Wandabschnitt aufweist, in den außen einer der beiden Dichtringe (14, 15) eingelassen ist, und daß die zylindrische Innenwand der Hülse (16) glatt durchgängig ist.

4. Gerät nach wenigstens einem der Ansprüche 1 - 3,
**dadurch gekennzeichnet,**
**daß** eine Abstreifklinke (18) an dem Verfahrbereich des beweglichen Kammerteils (2) so angeordnet ist, daß sie nur bei Verfahren des beweglichen Kammerteils (2) aus der zusammengesetzten Stellung in die Öffnungsstellung wirksam ist.

5. Gerät nach einem der vorangehenden Ansprüche,
**dadurch gekennzeichnet,**
**daß** die Abstreifklinke (18) gegen einen Anschlag schwenkbar an einem ortsfest mit dem Geräterahmen (1) verbundenen Träger (17) gelagert ist.

6. Gerät nach einem der vorangehenden Ansprüche,
**dadurch gekennzeichnet, daß** die Abstreifklinke gegen einen Anschlag schwenkbar an der Hülse gelagert ist.

7. Gerät nach einem der vorangehenden Ansprüche,
**dadurch gekennzeichnet,**
**daß** aus einer der beiden Innenflächen (7, 8) eines der beiden Kammerteile (2, 3) mindestens eine noppenförmige Erhebung (9) mit einer Brühwasserzufuhrbohrung (12) hervorsteht.

8. Gerät nach einem der vorangehenden Ansprüche,
**dadurch gekennzeichnet,**
**daß** aus der anderen der beiden Innenflächen (8) im Abstand zu deren äußeren Rand ringförmige Rillen (10) konzentrisch angeordnet sind, die mit mindestens einer Sudablaufleitung (13) in Verbindung stehen.

9. Gerät nach einem der vorangehenden Ansprüche ,
**dadurch gekennzeichnet,**
**daß** mindestens eines der beiden Kammerteile in der zusammengesetzten Stellung gegenüber dem anderen Kammerteil unter Brühwasserdruck entgegen einer Feder (21) innerhalb eines Hülsendichtungsbereichs verschiebbar ist, bis ein stromabwärts des Brühwasserraums angeordnetes federbelastetes Crema-Ventil (20) öffnet.

10. Gerät nach einem der vorangehenden Ansprüche,
**dadurch gekennzeichnet,**
**daß** eine Sicherheitsvorrichtung mit einem beweglichen Kammerteil und/oder der Hülse in Verbindung steht, dergestalt, daß eine Brühwasserzufuhr in die Brühkammer gesperrt ist, wenn diese nicht geschlossen und abgedichtet ist.

11. Gerät nach einem der vorangehenden Ansprüche,
**gekennzeichnet, durch**
eine programmierbare Durchflußmengeristeuerung der Brühwassermenge.

## Claims

1. Apparatus for preparing hot beverages, in particular for coffee or espresso, comprising an outwardly substantially cylindrical brewing chamber (6) including at least two chamber portions (2, 3) one of which (2) is removable to provide an open position relative to the other (3), wherein said brewing chamber (6) is sealed by at least one sealing ring (14, 15), wherein a sleeve (16) having an interior wall adapted to said cylindrical brewing chamber may be shifted over the two chamber portions (2, 3), and wherein between an interior wall of said sleeve (16) and said brewing chamber (6) at least two sealing rings (14, 15) are arranged so that in the close position one of said two sealing rings (14, 15) each seals one of the two chamber portions (2, 3) each at the interior wall of said sleeve relative to the outside,
**characterized in**
**that** in order to receive or to dispense a portion capsule, particular a pouch (22), said brewing chamber (6) is devided, substantially in the middle thereof, into a movable chamber portion (2) and a stationary chamber portion (3) so that said movable portion (2) comprises a substantially planar lower interior face of said brewing chamber (6) and forms a first half (4) of said brewing chamber (6), and said stationary chamber portion (3) comprises a substantially planar upper interior face (8) of said brewing chamber (6) and forms a second half (5) of said brewing chamber (6), and that in the open position of said chamber portions (2, 3) said sleeve (16) is so far moved back over said stationary chamber (3) that said movable chamber portion (2) rests exposed.

2. Apparatus according to claim 1,
**characterized by**
a coupling between said sleeve (16) and a movable portion (2) of said chamber portions forcibly guided composable und removable from each other, by means of which after composing said two chamber portions said sleeve may sealingly be shifted over said movable chamber portion (2).

3. Apparatus according to claim 1 or 2,
**characterized in**
**that** each of said chamber portions (2, 3) includes a closed cylindrical wall section into which, on the outside, one of said two sealing rings (14, 15) is embedded and that said cylindrical interior wall of said sleeve (16) is completely smooth.

4. Apparatus according to at least on of claims 1 through 3,
**characterized in**
**that** a stripping blade (18) is disposed at the moving area of said movable chamber portion (2) so that it is effective only when moving said movable chamber portion (2) from the composed position into the open position.

5. Apparatus according to one of the foregoing claims,
**characterized in**
**that** said stripping blade (18) is supported, tiltingly against a stop, on a carrier (17) which is stationarily connected with the apparatus frame (1).

6. Apparatus according to one of the foregoing claims,
**characterized in**
**that** said stripping blade is supported, tiltingly against a stop, on said sleeve.

7. Apparatus according to one of the foregoing claims,
**characterized in**
**that** from one of said two interior faces (7, 8) of one of said chamber portions (2, 3), at least one nap-shaped elevation (9) including a brewing water inlet bore (12) is projecting.

8. Apparatur according to one of the foregoing claims,
**characterized in**
**that** out of the other of the said two internal faces (8), in spaced relationship to the outer edge of which, annular grooves (10) are concentrically arranged which are connected with at least one brew discharge duct (13).

9. Apparatus according to one of the foregoing claims,
**characterized in**
**that** at least one of said chamber portions in the composed position may be moved, under boiling water pressure against a spring (21), relative to the other chamber portion within a sleeve sealing area until a spring-loaded crema valve (20) disposed downstream of said brewing water space opens.

10. Apparatus according to one of the foregoing claims,
**characterized in**
**that** a safety device is connected with a movable chamber portion and/or said sleeve so that brewing water supply to said brewing chamber is locked when it is not closed and sealed.

11. Apparatus according to one of the foregoing claims,
**characterized by**
programmable flow control of the brewing water quantity.

## Revendications

1. Appareil pour la préparation de boissons chaudes en particulier du café et de l'espresso, avec une chambre de percolation (6) sensiblement cylindrique à l'extérieur, qui comprend au moins deux parties de chambre (2, 3), dont l'une (2) peut être séparée de l'autre (3) dans une position d'ouverture, la chambre de percolation (6) étant rendue étanche avec au moins une bague d'étanchéité (14, 15), une douille (16) avec une paroi intérieure adaptée à la chambre de percolation cylindrique pouvant coulisser sur les deux parties de chambre (2, 3) et au moins deux bagues d'étanchéité (14, 15) étant disposées entre une paroi intérieure de la douille (16) de la chambre de percolation (6) de telle sorte que, dans la position de fermeture, respectivement l'une des deux bagues d'étanchéité (14, 15) assure l'étanchéité vers l'extérieur de l'une des deux parties de chambre (2, 3) sur la paroi intérieure de la douille,
**caractérisé**
**en ce que**, pour la réception ou l'évacuation d'une capsule de portion, en particulier d'un sachet-dose (22), la chambre de percolation (6) est divisée sensiblement au centre, en une partie de chambre (2) mobile et une partie de chambre (3) solidaire de l'appareil, en ce que la partie (2) mobile comprend une surface intérieure inférieure, sensiblement plane, de la chambre de percolation (6) et forme une première moitié (4) de la chambre de percolation (6) et la partie de chambre (3) solidaire de l'appareil comprend une surface intérieure (8) supérieure sensiblement plane de la chambre de percolation (6) et forme une seconde moitié (5) de la chambre de percolation (6), et en ce que la douille (16) est reculée dans la position d'ouverture des parties de chambre (2, 3) sur la partie de chambre (3) solidaire de l'appareil jusqu'à ce que la partie de chambre (2) mobile soit libre.

2. Appareil selon la revendication 1,
**caractérisé par**
un accouplement entre la douille (16) et une partie mobile (2) des deux parties de chambre, qui peuvent être assemblées par guidage forcé et peuvent être éloignées l'une de l'autre, avec lequel la douille peut être poussée en assurant l'étanchéité sur la partie de chambre (2) mobile après l'assemblage des deux parties de chambre.

3. Appareil selon la revendication 1 ou 2,
**caractérisé en ce que**
chacune des deux parties de chambre (2, 3) présente une partie de paroi cylindrique fermée, dans laquelle l'une des deux bagues d'étanchéité (14, 15) est insérée à l'extérieur et **en ce que** la paroi intérieure cylindrique de la douille (16) est lisse de façon continue.

4. Appareil selon au moins l'une des revendications 1 à 3,
**caractérisé en ce que**
un cliquet racleur (18) est disposé sur la zone de déplacement de la partie de chambre (2) mobile de telle sorte qu'il n'est efficace qu'en cas de déplacement de la partie de chambre (2) mobile de la position assemblée à la position d'ouverture.

5. Appareil selon l'une quelconque des revendications précédentes,
**caractérisé en ce que**
le cliquet racleur (18) est monté sur un support (17) relié de façon fixe au châssis de l'appareil (1) de façon à pouvoir basculer contre une butée.

6. Appareil selon l'une des revendications précédentes,
**caractérisé en ce que**
le cliquet racleur est monté sur la douille de façon à pouvoir basculer contre une butée.

7. Appareil selon l'une des revendications précédentes,
**caractérisé en ce que**
au moins une saillie (9) en forme de bouton, avec un perçage d'arrivée d'eau de percolation (12) dépasse de l'une des deux surfaces intérieures (7, 8) de l'une des deux parties de chambre (2, 3).

8. Appareil selon l'une des revendications précédentes,
**caractérisé en ce que** sont disposées de façon concentrique,
à partir de l'autre des deux surfaces intérieures (8) à distance de leur bord extérieur, des rainures (10) en forme d'anneau qui sont en liaison avec au moins une conduite d'écoulement de concoction (13).

9. Appareil selon l'une des revendications précédentes,
**caractérisé en ce que**
au moins l'une des deux parties de chambre peut être déplacée dans la position assemblée par rapport à l'autre partie de chambre sous l'effet de la pression d'eau de percolation à l'encontre d'un ressort (21) à l'intérieur d'une zone d'étanchéité de douille, jusqu'à ce que s'ouvre une vanne à crème (20) sollicitée par un ressort et disposée en aval de l'espace d'eau de percolation.

10. Appareil selon l'une des revendications précédentes,
**caractérisé en ce que**
un dispositif de sécurité est relié à une partie de chambre mobile et/ou la douille, de telle sorte qu'une arrivée d'eau de percolation dans la chambre de percolation est bloquée lorsque celle-ci n'est pas fermée et rendue étanche.

11. Appareil selon l'une quelconque des revendications précédentes,
**caractérisé par**
une commande programmable de débit de la quantité d'eau de percolation.
